# EUROPÄISCHE PATENTSCHRIFT

(11) **EP 0 982 483 B1**
(45) Veröffentlichungstag und Bekanntmachung des Hinweises auf die Patenterteilung: **13.12.2006**
(21) Anmeldenummer: 99110840.8
(22) Anmeldetag: 05.06.1999
(51) Int. Cl.: F02D 9/02, F02D 11/10

(54) **Drosselklappenstutzen mit einer Antriebseinrichtung**
Throttle valve body having a driving device
Corps de papillon comprenant un dispositif d'entraînement

(30) Priorität: 25.08.1998 DE 19838660
(43) Veröffentlichungstag der Anmeldung: 01.03.2000
(73) Patentinhaber: SIEMENS AKTIENGESELLSCHAFT, 80333 München (DE)
(72) Erfinder: Reimann, Christian, 61273 Wehrheim (DE)

(56) Entgegenhaltungen:
- EP-A- 0 707 043
- DE-A- 4 401 585
- DE-A- 19 540 586
- FR-A- 2 598 047
- GB-A- 1 520 744
- GB-A- 1 588 255
- US-A- 3 789 250
- US-A- 4 778 354
- US-A- 4 900 968
- US-A- 5 121 021
- US-A- 5 584 114
- US-A- 5 694 798

## Beschreibung

Die Erfindung betrifft einen Drosselklappenstutzen mit einer Antriebseinrichtung gemäß den Merkmalen des Oberbegriffes des Patentanspruches 1.

Stellvertretend für eine solche Antriebseinrichtung ist eine Vorrichtung zur Regelung einer Brennkraftmaschine in Fahrzeugen erwähnt, wie sie aus der EP 0 337 099 A2 bekannt ist. Diese Antriebseinrichtung weist ein Gehäuse auf, in welchem ein als Elektromotor ausgebildeter Stellantrieb angeordnet ist. Der Stellantrieb treibt über Übertragungselemente wie ein Untersetzungsgetriebe ein bewegliches Element an, das bei dieser Vorrichtung zur Regelung der Leistung einer Brennkraftmaschine als Drosselklappe ausgestaltet ist.

Solche Arten von Antriebseinrichtungen, insbesondere bei der Anwendung in Fahrzeugen, werden heutzutage in Serie mit hohen Stückzahlen hergestellt, so dass es bei der Herstellung einer solchen Antriebseinrichtung auf verfahrensökonomische Abläufe der Produktion ankommt.

Bei der aus der EP 0 37 099 A2 bekannten Vorrichtung ist es von Nachteil, dass zunächst der Stellantrieb an sich hergestellt werden muss, wobei dieser Stellantrieb aus einer Vielzahl von Teilen wie zum Beispiel Gehäuse, Rotor, Stator und Welle besteht. Nach Zusammenbau des Stellantriebes wird dieser in dem Gehäuse der Antriebseinrichtung eingesetzt und festgesetzt und anschließend mit den Übertragungselementen wie dem Untersetzngsgetriebe verbunden. Dieser Aufwand ist bei der eingangs geschilderten Serienproduktion zu hoch.

Die US 5,584,114 A offenbart einen Elektromotor, bei dem einige Bauteile des Stators in einem Gehäuse aus Kunststoff angeordnet sind. Das Gehäuse kann beispielsweise aus einem Scheibenwischerantrieb verschraubt werden. Hierdurch sind Antriebseinrichtung und der Stellantrieb als unabhängig voneinander vorzumontierende Bauteile mit jeweils eigenen Gehäusen ausgebildet, welche bei der Endmontage zueinander ausgerichtet und miteinander verschraubt werden müssen. Gerade dies soll mit der vorliegenden Erfindung vermieden werden.

Die DE 44 01 585 A1 offenbart einen Drosselklappenstutzen, bei dem eine Spule von Kunststoff umgeben ist. Der Stellantrieb ist nicht offenbart.

Die DE 195 40 586 A1 offenbart einen Drosselklappenstutzen mit einem in einem Gehäuse eingesetzten Elektromotor. Dies führt zunächst zu einer aufwändigen Montage des Elektromotors und zu einer hohen Teileanzahl, da der Elektromotor ein eigenes Gehäuse benötigt. Der Drosselklappenstutzen ist aus Aluminium und, soweit zeichnerisch offenbart, einstückig mit dem den Stellantrieb halternden Bereich gefertigt. Funktionselemente des Stellantriebs sind daher offenbar nicht mit Kunststoff umgeben.

Der Erfindung liegt daher die Aufgabe zugrunde, einen Drosselklappenstutzen mit einer Antriebseinrichtung dergestalt zu verbessern, dass der Montageaufwand und auch der Teileaufwand, das heißt die Herstellung der Antriebseinrichtung insgesamt vereinfacht wird.

Diese Aufgabe ist durch die Merkmale des Patentanspruches 1 gelöst.

Erfindungsgemäß ist vorgesehen, dass das Gehäuse aus Kunststoff gefertigt ist und Funktionselemente des Stellantriebes in dem Gehäuse angeordnet und zumindest teilweise von Kunststoff umgeben sind. Dies hat den Vorteil, dass schon mit der Herstellung des Gehäuses Funktionselemente in die Form des Kunststoffgehäuses einlegbar beziehungsweise einbringbar sind, die anschließend von Kunststoff umgeben und damit festgesetzt werden. Daher stellt das Kunststoffgehäuse der Antriebseinrichtung gleichzeitig auch das Gehäuse des Stellantriebes dar. Somit verringert sich der Teileaufwand, da ein eigenständiges Gehäuse für den Stellantrieb entfällt. Es entfällt darüber hinaus ein zusätzlicher Montageaufwand, da zum Beispiel bei Ausgestaltung des Stellantriebes als Elektromotor, was als vorteilhafte Weiterbildung angesehen wird, nur noch der Rotor mit seiner Motorwelle in die in dem Gehäuse der Antriebseinrichtung vorgesehene Ausnehmung eingesetzt werden muss, wobei der den Rotor konzentrisch umgebende Stator sich schon in dem Gehäuse aus Kunststoff befindet.

In Weiterbildung der Erfindung ist das Gehäuse aus Kunststoff im Spritzgussverfahren fertigbar. Dies hat den Vorteil, dass die erforderlichen Funktionselemente des Stellantriebes in eine Spritzgussform eingelegt werden könne, wobei dann diese Funktionselemente an den Stellen, an denen sie nicht mit Kunststoff umgeben werden sollen, gegenüber der Spritzgussform abgedichtet werden und anschließend die Spritzgussform mit Kunststoff ausgegossen beziehungsweise ausgespritzt wird. Neben dem Vorteil, dass schon Funktionselemente des Stellanriebes in das Kunststoffgehäuse einsetzbar sind, ist es weiterhin von Vorteil, dass auch weitere Elemente der Antriebseinrichtung, wie zum Beispiel Lager, elektrische Verbindungen oder dergleichen in oder an de Gehäuse aus Kunststoff der Antriebseinrichtung eingelegt oder angebracht werden können. Damit ergibt sich gerade bei der Serienproduktion von solchen Antriebseinrichtungen eine rationelle Produktion.

In Weiterbildung der Erfindung ist der Elektromotor, der den Stellantrieb bildet, ein so genannter Gleichstrommotor (auch DC-Motor genannt), wobei von dem Gleichstrommotor zumindest dessen Rückschlusskörper in dem Kunststoffgehäuse der Antriebseinrichtung angeordnet ist. Mehrere dieser Rückschlusskörper, die auch einteilig ausgebildet sein können und dann in vorteilhafterweise als Polrohr ausgestaltet sind, können vor dem Spritzgießen des Kunststoffgehäuses in die Spritzgussform eingelegt werden und mit Kunststoff umgossen beziehungsweise umspritzt werden. Die Verwendung von elektrisch nicht leitendem Kunststoff zur Herstellung des Gehäuses ist an dieser Stelle besonders wichtig, so dass elektrische beziehungsweise magnetische Kurzschlüsse vermieden werden. Die Integration von Funktionselementen in dem Gehäuse aus Kunststoff ist gerade bei Elektromotoren mit vielen Polen von Vorteil, da sich hierdurch die Anzahl der zu montierenden Bauteile wesentlich verringert.

Erfindungsgemäß sind auch die Magnetschalen des als Gleichstrommotor ausgestalteten Elektromotors zumindest teilweise in dem Kunststoffgehäuse der Antriebseinrichtung angeordnet. Auch diese permanentmagnetischen Magnetschalen werden vor dem Ausspritzen der Spritzgussform des Gehäuses in diese Spritzgussform eingelegt, so dass diese permanentmagnetischen Magnetschalen als weitere Funktionselemente in dem Kunststoffgehäuse integrierbar sind. Das Einsetzen der Rückschlusskörper sowie der Magnetschalen in die Spritzgussform kann automatisiert werden, so dass hier Fehlerquellen, die bei einer manuellen Zusammensetzung nicht ausgeschlossen werden können, aufgrund der maschinellen Fertigung vermeidbar sind. Ein weiterer Vorteil der Integration der permanentmagnetischen Magnetschalen in dem Kunststoffgehäuse hat den Vorteil, dass sie nicht nur an den Sitrnseiten und Längsseiten von Kunststoff umgeben sind und damit gehalten werden, sondern auch im Bereich ihrer Umfangsoberfläche, die dem Rotor zugewandt ist, mit einer dünnen Kunststoffschicht umgeben werden können, um ein Ablösen von Teilen er Magnetschalen zu vermeiden, da diese in der Regel spröde sind und zu Rissbildungen neigen. Damit wird wirksam eine Herabsetzung des maximal erzeugbaren Drehmomentes aufgrund eines magnetischen Kurzschlusses, der von einem abgelösten Teil einer Magnetschale ausgelöst werden könnte, sowie eine Blockierung des Elektromotors vermieden.

Erfindungsgemäß weist das Gehäuse der Antriebseinrichtung Mittel zum Halten der Magnetschalen auf, wobei diese Mittel insbesondere einstückig mit dem Gehäuse hergestellte Stege und/oder Clipse ausgebildet sind. Dies hat den Vorteil, dass nach der Entnahme des Kunststoffgehäuses aus der Spritzgussform die Magnetschalen für den Gleichstrommotor an die vorgesehenen Stellen eingesetzt und durch die Stege beziehungsweise die Clipse einfach montiert und gehalten werden können. Dadurch erhöht sich die Montagefreundlichkeit wesentlich, da durch diese Mittel zum Halten auch die Stellen, an denen die Magnetschalen eingesetzt werden sollen, eindeutig vorgegeben sind. Dabei sind diese Mittel derart ausgestaltet, dass sie eine geringe Kraft auf die Magnetschalen ausüben, die einen ausreichenden Halt mittels Kraftschluss gewährleistet.

Alternativ zu dem bisher beschriebenen Einsatz des Gleichstrommotors kann der Elektromotor als so genannter elektronisch kommutierter Elektromotor (auch EC-Motor genannt) ausgestaltet sein, wobei bei diesem elektronisch kommutierten Elektromotor der Rotor die Rücksschlusskörper sowie die Magnetschalen trägt und die Wicklungen, die den Stator bilden, dann in dem Kunststoffgehäuse integriert sind. Ein solcher elektronisch kommutierter Elektromotor hat den Vorteil, dass die Mittel wie Rückschlusskörper und Magnetschalen zur Erzeugung des Drehmomentes sehr dicht beieinander angeordnet sind, wodurch sich ein sehr hohes Drehmoment erzeugen lässt und durch eine insbesondere geregelte Bestromung der Wicklungen eine sehr feinfühlige Regelung des elektronisch kommutierten Elektromotors, das heißt dessen Drehzahl, gewährleistet ist.

Sowohl der Gleichstrommotor als auch der elektronisch kommutierte Elektromotor können als Innenläufer- oder Außenläufermotor ausgebildet sein. Je nach Art der Spannungsversorgung wird der Stellantrieb, insbesondere der Elektromotor beziehungsweise ein Elektromagnet, mit Gleichspannung oder Wechselspannung betrieben.

Als vorteilhafte Anwendung der erfindungsgemäßen Einrichtung ist die Anwendung bei einem Drosselklappenstutzen zur Steuerung der Leistungsabgabe einer Brennkraftmaschine, insbesondere eines Fahrzeuges, anzusehen, wobei der Stellantrieb zum Bewegen einer Drosselklappe oder dergleichen in Abhängigkeit einer Sollwertvorgabe für die Leistungsabgabe der Brennkraftmaschine ausgebildet ist. Eine Ausgestaltung einer solchen Antriebseinrichtung ist in den Figuren gezeigt, so dass später darauf eingegangen wird.

Die Ausgestaltung eines erfindungsgemäßen Drosselklappenstutzens mit einer Antriebseinrichtung ist im folgenden beschrieben und anhand der Figuren erläutert, wobei sich diese insbesondere auf die Anwendung bei einem Drosselklappenstutzen zur Steuerung der Leistungsabgabe einer Brennkraftmaschine, insbesondere eines Fahrzeuges, beziehen, wobei diese beispielhafte Anwendung nicht einschränkend ist.

Es zeigen:
- Figur 1:: einen Schnitt durch einen Teil einer Antriebseinrichtung im Bereich des Stellantriebes,
- Figur 2:: einen Querschnitt gemäß Figur 1,
- Figur 3:: einen Längsschnitt durch einen Drosselklappenstutzen.

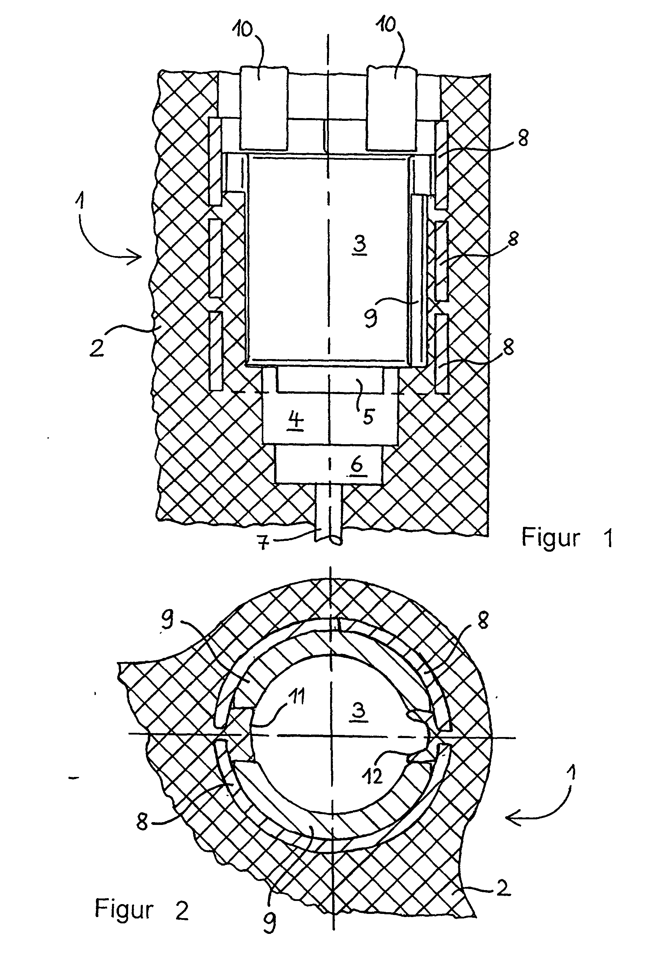

Figur 1 zeigt einen Längsschnitt durch eine Antriebseinrichtung 1 im Bereich des Stellantriebes, der hierbei als Elektromotor, insbesondere als so genannter Gleichstrommotor ausgebildet ist. Die Antriebseinrichtung 1 weist ein Gehäuse 2 auf, welches kreuzschraffiert dargestellt ist und aus Kunststoff, insbesondere im Spritzgussverfahren hergestellt ist. Das Gehäuse 2 weist eine Ausnehmung für einen Rotor 3 des Elektromotors auf, wobei zusätzlich ein Raum 4 vorgesehen ist, in dem sich an dem Rotor 3 ein Polwender 5 befindet.

In an sich bekannter Weise weist der Rotor 3 nicht dargestellte Wicklungen auf, die mit dem Polwender 5 verbunden sind, wobei in dem Raum 4 nicht gezeigte, sogenannte Kohlebürsten oder dergleichen vorhanden sind, über die die Spannung zur Einstellung einer bestimmten Drehzahl über den Polwender 5 des Rotors 3 in dessen Wicklungen übertragen wird. Dies ist an sich bekannt und bedarf daher an dieser Stelle keiner weiteren Beschreibung.

In dem Gehäuse 2 der Antriebseinrichtung 1 ist noch ein Lagerraum 6 vorhanden, wobei dieser Lagerraum 6 ein Lager für eine Welle 7 des Rotors 3 entweder in dem Gehäuse 2 integriert ist oder später einsetzbar ist. Über die Welle 7 wird ein in Figur 1 nicht gezeigtes bewegliches Element angetrieben. Der Rotor 3 kann in einfachster Art und Weise in der in dem Gehäuse 2 vorgesehenen Ausnehmung eingesetzt werden.

Mit Herstellung des Gehäuses 2 aus Kunststoff wurden schon Rückschlußkörper 8 eingesetzt, die in Figur 1 aus mehreren Teilen bestehen, jedoch auch einstückig ausgebildet sein können. Einen einstückig ausgestalteten Rückschlußkörper 8 bezeichnet man dann auch als Polrohr. Weiterhin besteht mit der Herstellung des Gehäuses 2 aus Kunststoff die Möglichkeit, auch Magnetschalen 9 schon in dem Gehäuse 2 der Antriebseinrichtung 1 zu integrieren. Denkbar ist aber auch, daß diese Magnetschalen 9 später eingesetzt werden, wobei in der folgenden Figur darauf eingegangen wird. Nach Einsatz des Rotors 3 in der entsprechenden Ausnehmung in dem Gehäuse 2 erfolgt noch eine Axialsicherung 10, so daß dieser Rotor 3 drehbewegbar, aber axial gesichert festgesetzt ist. Es ist denkbar, mit der Herstellung des Gehäuses 2 auch schon Aufnahmevorrichtungen für diese Axialsicherung 10 vorzusehen.

Figur 2 zeigt einen Querschnitt durch das Gehäuse 2 gemäß Figur 1, wobei gleiche Elemente mit gleichen Bezugsziffern wie in Figur 1 versehen sind. Erkennbar ist die konzentrische Anordnung der Rückschlußkörper 8 sowie der Magnetschalen 9 um den Rotor 3 herum. Weiterhin sind noch Mittel gezeigt, mittels derer die Magnetschalen 9 innerhalb der Ausnehmung für den Rotor 3 in dem Gehäuse 2 festgesetzt werden können. Bei diesem Mittel handelt es sich um bei Betrachtung der Figur 2 senkrecht in die Figur 2 oder senkrecht aus der Figur 2 herauslaufende Stege 11, wobei beim Einsatz von nur zwei Magnetschalen 9, wie die sie in Figur 2 dargestellt ist, auch nur ein Steg 11 vorhanden ist. Als Gegenpart zu dem Steg 11 (beziehungsweise bei Verwendung von mehr als zwei Magnetschalen 9 auch mehrere Stege) ist ein Clips 12 vorgesehen, der in Umfangsrichtung die jeweilige Magnetschale 9 gegen den zugehörigen Steg 11 drückt, und somit die Magnetschalen 9 durch Kraftschluß hält. Zur Verbesserung der Halteeigenschaften können die Längskonturen des Steges 11 und die daran anliegenden Längskonturen der Magnetschalen 9 hinterschnitten sein, so daß beim Einsetzen der Magnetschalen 9 ein Herausspringen vermieden wird. Die Außenkonturen der Stege 11 beziehungsweise der Clips 12 sind dabei so gewählt, daß sie maximal mit der nach innen gerichteten Außenoberfläche der Magnetschalen 9 abschließen, damit sie nicht in den Bewegungsbereich des Rotors 3 hineinragen.

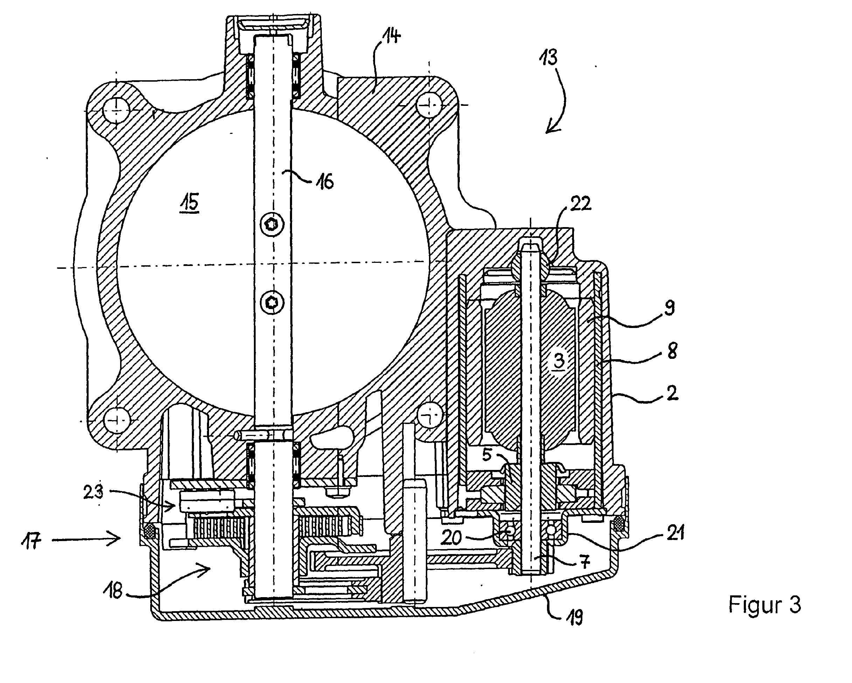

Figur 3 zeigt als Anwendung einer erfindungsgemäßen Antriebseinrichtung einen sogenannten Drosselklappstutzen 13, der zur Steuerung der Leistungsabgabe einer Brennkraftmaschine, insbesondere eines Fahrzeuges eingesetzt wird. Ein solcher Drosselklappenstutzen 13 sitzt in der Regel zwischen der Luftansaugung (zum Beispiel Luftfilter) und dem Einlaßbereich der Brennkraftmaschine.

Der Drosselklappenstutzen 13 weist einen Leitungsstutzen 14 auf, der aus Kunststoff hergestellt ist und zur Leistungssteuerung eine Drosselklappe 15 beinhaltet, die den Leitungsquerschnitt des Leitungsstutzens 14 mehr oder weniger verschließt beziehungsweise freigibt.

Die Drosselklappe 15 ist auf einer Drosselklappenwelle 16 angeordnet, wobei auf einer Antriebsseite 17 des Drosselklappenstutzens 13 ein Getriebe 18 vorgesehen ist, welches einerseits mit der Drosselklappenwelle 16 verbunden ist. Andererseits ist ein weiteres Zahnrad des Getriebes 18 mit der Welle 7 verbunden, so daß durch Bestromung des Elektromotors eine Drehung des Rotors 3 auch eine entsprechend untersetzte Drehung der Drosselklappe 15 und damit eine Veränderung des Leitungsquerschnittes bewirkt.

Das Gehäuse 2 des Drosselklappenstutzens 13 ist auf der Antriebseite 17 von einem Gehäusedeckel 19 verschlossen, so daß diese Antriebsseite 17 vor Verschmutzungen und mechanischen Einwirkungen von Außen geschützt ist.

Die Welle 7 des Rotors 3 ist, wie schon in Figur 1 angedeutet, mittels eines Kugellagers 20 gelagert, wobei dieses Kugellager 20 sich bei der Montage des Rotors 3 entweder auf der Welle 7 befindet und in eine entsprechende Ausnehmung in dem Gehäuse 2 eingesetzt wird, oder sich das Kugellager 20 schon in dem Gehäuse 2 befindet und die Welle 7 durch das Kugellager 20 durchgeschoben wird.

Bei dem in Figur 3 gezeigten Drosselklappenstutzen 13 verfällt es sich so, daß das Gehäuse 2 eine Ausnehmung für den Rotor 3 aufweist, wobei im Bereich des Rotors 3 konzentrisch um diesen herum in dem Gehäuse 2 schon der Rückschlußkörper 8 (hier ausgestaltet als Polrohr) sowie die Magnetschalen 9 mit Herstellung des Gehäuses 2 eingelassen sind. Nach dem Einsetzen des vorgefertigten Rotors 3 in diese entsprechende Ausnehmung wird der Rotorbereich von einer Abdeckplatte 21 verschlossen, wobei diese durch Verschrauben oder auch durch Verkleben mit dem Gehäuse 2 verbunden wird. Bei der in Figur 3 gezeigten Ausgestaltung nimmt die Abdeckplatte 21 das Kugellager 20 auf, wobei an dem anderen Ende der Welle 7 noch ein weiteres Lager 22 vorgesehen ist, daß auch schon als Funktionselement des Elektromotors in dem Gehäuse 2 mit der Herstellung angeordnet werden kann.

Der Vollständigkeit halber ist noch eine Erfassungseinrichtung 23 zur Erfassung der Position der Drosselklappe 15 erwähnt, wobei eine Ansteuerung des Elektromotors in Abhängigkeit der mit der Erfassungseinrichtung 23 erfaßten Position der Drosselklappe 15 sowie zumindest in Abhängigkeit einer Leistungsanforderung gesteuert beziehungsweise geregelt erfolgt.

### Bezugszeichenliste:

- 1.: Antriebseinrichtung
- 2.: Gehäuse
- 3.: Rotor
- 4.: Raum
- 5.: Polwender
- 6.: Lagerraum
- 7.: Welle
- 8.: Rückschlußkörper
- 9.: Magnetschale
- 10.: Axialsicherung
- 11.: Steg
- 12.: Clips
- 13.: Drosselklappenstutzen
- 14.: Leitungsstutzen
- 15.: Drosselklappe
- 16.: Drosselklappenwelle
- 17.: Antriebsseite
- 18.: Getriebe
- 19.: Gehäusedeckel
- 20.: Kugellager
- 21.: Abdeckplatte
- 22.: weiteres Lager
- 23.: Erfassungseinrichtung

## Patentansprüche

1. Drosselklappenstutzen mit einer Antriebseinrichtung (1) mit einem in einem Gehäuse (2) angeordneten beweglichen Element und mit einem das bewegliche Element antreibenden Stellantrieb, wobei Funktionselemente des Stellantriebes zumindest teilweise von Kunststoff umgeben sind und wobei das Gehäuse (2) des beweglichen Elements aus Kunststoff gefertigt ist und die Funktionselemente des Stellantriebes zumindest teilweise umschließt und wobei der Stellantrieb zum Bewegen einer Drosselklappe (15) oder dergleichen in Abhängigkeit von einer Sollwertvorgabe für die Leistungsabgabe der Brennkraftmaschine ausgebildet ist, **dadurch gekennzeichnet, dass** eine angetriebene Welle (7) des Stellantriebs und eine Drosselklappenwelle (16) parallel zueinander angeordnet sind und dass ein zwischen der Welle (7) und der Drosselklappenwelle (16) angeordnetes Getriebe (18) einen mit dem Gehäuse (2) des Stellantriebes und mit einem Leitungsstutzen (14) des Drosselklappenstutzens (13) verbundenen Gehäusedeckel (19) aufweist, dass die Magnetschalen (9) eines den Stellantrieb bildenden Elektromotors zumindest teilweise in dem Gehäuse angeordnet sind und dass das Gehäuse (2) Mittel zum Halten der Magnetschalen (9), insbesondere einstückig mit dem Gehäuse (2) hergestellte Stege (11) und/oder Clips (12), aufweist.

2. Drosselklappenstutzen mit einer Antriebseinrichtung (1) nach Anspruch 1, **dadurch gekennzeichnet, dass** das Gehäuse (2) im Spritzgussverfahren fertigbar ist.

3. Drosselklappenstutzen mit einer Antriebseinrichtung (1) nach Anspruch 1 oder 2, **dadurch gekennzeichnet, dass** der den Stellantrieb bildende romotor ein Gleichstrommotor ist, von dem zumindest dessen Rückschlusskörper (8) in dem Gehäuse angeordnet ist.

4. Drosselklappenstutzen mit einer Antriebseinrichtung (1) nach Anspruch 4, **dadurch gekennzeichnet, dass** der Rückschlusskörper (8) als Polrohr ausgebildet ist.

## Claims

1. Throttle valve body with a drive device (1) with a movable element arranged in a housing (2) and with an actuating drive driving the movable element, functional elements of the actuating drive being at least partially surrounded by plastics and the housing (2) of the movable element being made from plastics and at least partially surrounding the functional elements of the actuating drive and the actuating drive being configured to move a throttle valve (15) or the like according to a predefined desired value for the power output of the internal combustion engine, **characterized in that** a driven shaft (7) of the actuating drive and a throttle valve shaft (16) are arranged parallel to one another and **in that** a transmission (18) arranged between the shaft (7) and the throttle valve shaft (16) comprises a housing cover (19) connected to the housing (2) of the actuating drive and to a stub pipe (14) of the throttle valve body (13), **in that** the magnetic shells (9) of an electric motor forming the actuating drive are arranged at least partially in the housing and **in that** the housing (2) comprises means for holding the magnetic shells (9), in particular webs (11) and/or clips (12) produced in one piece with the housing (2).

2. Throttle valve body with a drive device (1) according to Claim 1, **characterized in that** the housing (2) may be made in an injection moulding process.

3. Throttle valve body with a drive device (1) according to Claim 1 or 2, **characterized in that** the electric motor forming the actuating drive is a direct current motor, of which at least the return body (8) is arranged in the housing.

4. Throttle valve body with a drive device (1) according to Claim 3, **characterized in that** the return body (8) is configured as a pole tube.

## Revendications

1. Tubulure à papillon de régulation des gaz ayant un système d'entraînement (1) comportant un organe mobile placé dans un boîtier (2) et un actionneur qui commande l'organe mobile, où les organes fonctionnels de l'actionneur sont entourés au moins partiellement de matière plastique et où le boîtier (2) de l'organe mobile est fabriqué en matière plastique et enferme au moins partiellement les organes fonctionnels de l'actionneur et où l'actionneur est conçu pour déplacer un papillon de régulation des gaz (15) ou un organe similaire en fonction d'une valeur de consigne prescrite pour la puissance délivrée par le moteur à combustion interne, **caractérisée par le fait qu'**un arbre d'entraînement (7) de l'actionneur et un arbre (16) du papillon de régulation des gaz sont disposés en parallèle l'un par rapport à l'autre et qu'une transmission (18) disposée entre l'arbre (7) et l'arbre (16) du papillon de régulation des gaz comporte un couvercle (19) de boîtier lié au boîtier (2) de l'actionneur et à un embout (14) de conduite de la tubulure (13) à papillon de régulation des gaz, que les coquilles magnétiques (9) d'un moteur électrique formant l'actionneur sont disposées au moins partiellement dans le boîtier et que le boîtier (2) comporte des moyens pour maintenir les coquilles magnétiques (9), notamment des épaulements (11) et / ou des agrafes (12) fabriqués en une seule pièce avec le boîtier (12).

2. Tubulure à papillon de régulation des gaz ayant un système d'entraînement (1), selon la revendication 1, **caractérisée par le fait que** le boîtier (2) peut être fabriqué avec un procédé à moulage par injection.

3. Tubulure à papillon de régulation des gaz ayant un système d'entraînement (1), selon la revendication 1 ou 2, **caractérisée par le fait que** le moteur électrique formant l'actionneur est un moteur à courant continu, dont au moins le corps (8) pour le retour du flux magnétique est placé dans le boîtier.

4. Tubulure à papillon de régulation des gaz ayant un système d'entraînement (1), selon la revendication 1, **caractérisée par le fait que** le corps (8) pour le retour du flux magnétique est conçu comme tube polaire.
